# DEMANDE DE BREVET EUROPEEN

(11) **EP 3 741 602 A1**
(43) Date de publication de la demande: **25.11.2020**
(21) Numéro de dépôt: 20172922.5
(22) Date de dépôt: 05.05.2020
(51) Int. Cl.: B60K 6/48, B60K 6/387, B60K 6/547, B60K 6/40, B60K 6/405, F16H 63/00, F16D 23/04

(54) **DISPOSITIF DE TRACTION HYBRIDE DE VEHICULE AUTOMOBILE**

(30) Priorité: 24.05.2019 FR 1905513
(71) Demandeur: Renault S.A.S., 92100 Boulogne-Billancourt (FR)
(72) Inventeur: RAOUL, MICHEL, 78990 ELANCOURT (FR)

(57) **Abrégé**

Dispositif de traction hybride (1) pour véhicule automobile composé d'une boîte de vitesses à arbres parallèles, dont un arbre primaire (20) transmet la puissance d'un moteur thermique d'entraînement à un arbre secondaire (20) relié aux roues du véhicule, et d'une machine électrique (60) qui transmet sa puissance sur un rapport unique à l'arbre primaire (20) de la boîte, caractérisé en ce que le mouvement de l'arbre rotor (61) de la machine électrique descend sur l'arbre primaire (20) par un mécanisme d'entraînement découplable comprenant un arbre intermédiaire (70) transmettant le mouvement de l'arbre de rotor (61) de la machine électrique à un pignon fou (82) accouplable sur un arbre de couplage (80) par un dispositif de couplage (90).

## Description

L'invention concerne un dispositif de traction hybride pour véhicule automobile comportant un moteur thermique avec sa boîte de vitesses manuelle ou robotisée, et une machine électrique connectée à la boîte de vitesses.

Plus précisément, elle a pour objet un dispositif de traction hybride pour véhicule automobile composé d'une boîte de vitesses à arbres parallèles, dont un arbre primaire transmet la puissance d'un moteur thermique d'entraînement à un arbre secondaire relié aux roues du véhicule, et d'une machine électrique qui transmet sa puissance sur un rapport unique, à l'arbre primaire de la boîte. Dans les véhicules hybrides comportant une double motorisation, thermique et électrique, la machine électrique est parfois liée au moteur thermique sur sa face dite « accessoires », comme l'alternateur. Pour augmenter la puissance électrique installée, et l'efficacité des échanges d'énergie de stockage en batterie et de restitution, il est plus avantageux de connecter la machine électrique à la boîte de vitesses. Cette disposition permet d'ouvrir ces véhicules à des possibilités nouvelles, en particulier le roulage en mode électrique, et de réduire la consommation.

La publication DE 10 2016 120 010, décrit un groupe motopropulseur comportant un moteur thermique, une boîte de vitesses, et une machine électrique. L'arbre du rotor de la machine électrique porte un premier pignon qui met en mouvement un premier arbre comportant deux pignons fixes, à l'aide d'un pignon intermédiaire. Un deuxième arbre porte deux pignons fous, un groupe de crabotage, et possède à son extrémité un pignon fixe qui engrène avec la couronne du différentiel. Une seconde boîte à deux rapports dédiés à la machine électrique, est ainsi adossée à la boîte de vitesses principale, qui est dédiée au moteur thermique.

Dans un groupe motopropulseur hybride, la machine électrique peut être connectée à l'un ou à l'autre des arbres de la boîte de vitesses, ou aux deux, comme dans publication FR 2 787 395. Celle-ci décrit une transmission hybride, dans laquelle la machine électrique est agencée entre le moteur et la boîte de vitesses. La machine électrique peut être connectée par un crabot, soit à l'arbre primaire, soit à l'arbre secondaire de la boîte.

La connexion de la machine électrique à l'arbre primaire, présente certains avantages. On dispose en particulier d'une capacité de démarrage du moteur thermique, lorsque le véhicule est à l'arrêt. De plus, on peut associer à cette hybridation légère un alterno-démarreur agencé sur la face accessoire, qui assure le démarrage du moteur dans presque toutes les situations, sauf par grand froid, où la courroie peut ne pas être assez efficiente.

Lorsque la machine électrique est liée avec l'arbre primaire sans démultiplication, elle bénéficie des rapports de réduction de la boîte, et donne tout son potentiel de traction et de brio. Toutefois, elle perturbe l'inertie et augmente la traînée équivalente de la boîte.

Dans une boîte à commande manuelle, il est nécessaire de pouvoir découpler rapidement la machine électrique, avant que le conducteur ne parvienne à la phase de synchronisation du rapport en cours d'engagement. Dans le cas d'une boîte robotisée, le découplage n'est pas absolument nécessaire. Un superviseur pilote la machine électrique pendant les changements de rapport, et limite, ou supprime, les effets indésirables d'inertie et de traînée. Dans certains cas, la machine électrique peut réaliser à elle seule la synchronisation, et les synchroniseurs classiques sont supprimés. Toutefois, pour une plus grande rapidité d'exécution, il est préférable d'ajouter un dispositif de découplage de la machine électrique.

Par ailleurs, si la machine électrique est coaxiale à l'arbre primaire, l'absence de démultiplication permet difficilement à celle-ci d'assurer elle-même le démarrage du moteur thermique La présente invention vise à introduire une démultiplication entre la machine électrique et l'arbre primaire de la boîte de vitesses, tout en pouvant rapidement les découpler.

Dans ce but, elle propose que le mouvement de l'arbre rotor de la machine électrique, descende sur l'arbre primaire par un mécanisme d'entraînement découplable, comprenant au moins un arbre de couplage et un pignon fou accouplable sur celui-ci par un dispositif de couplage.

Le mécanisme d'entraînement peut être rapporté à l'intérieur, ou à l'extérieur de la boîte de vitesses. De préférence, la démultiplication est choisie pour assurer le couple nécessaire au démarrage du moteur.

Selon une autre caractéristique de l'invention, le mécanisme d'entraînement intermédiaire comprend un dispositif de découplage entre la machine électrique et l'arbre primaire de la boîte. Dans un mode de réalisation particulier, le dispositif de couplage est composé d'un flasque rapporté sur le pignon fou, entraînant en rotation un cône inférieur et un cône intermédiaire supérieur, et d'un cône supérieur solidaire d'un moyeu fixé sur l'arbre de couplage, entraînant aussi en rotation un cône intermédiaire inférieur.

Lorsque la démultiplication entre la machine électrique et l'arbre primaire est choisie pour assurer le couple nécessaire au démarrage du moteur, le démarrage est possible par une procédure particulière, qui est de mettre la boîte de vitesses au point mort et de fermer l'embrayage. Le démarreur classique à pignon est alors supprimé. Un autre avantage, est la possibilité de faire de la recharge batterie à l'arrêt. Il faut également dans ce cas, fermer l'embrayage et mettre la boîte au point mort.

Combinée à la démultiplication du rapport de première, la démultiplication entre la machine électrique et l'arbre primaire, permet d'atteindre, par la traction électrique, un niveau de couple à la roue suffisant pour déplacer le véhicule en toutes circonstances. Les éléments de transmission spécifiques à la marche arrière peuvent être supprimés. Enfin, l'association de la machine de traction à un alterno-démarreur permet un fonctionnement en hybride série et une utilisation en durée indéterminée de la marche arrière.

Le mécanisme d'entraînement comprend un premier pignon supporté par l'arbre rotor qui engrène avec un pignon fixe rapporté sur un arbre intermédiaire portant une denture fixe. Cette denture engrène à son tour avec un pignon fou porté par un second arbre de couplage. Le pignon fou et l'arbre sont rendus libres et indépendants par l'ouverture d'un dispositif de couplage par adhérence. La présente invention sera mieux comprise à la lecture de la description suivante d'un mode de réalisation non limitatif de celle-ci, en se reportant aux dessins annexés.
[Fig. 1] est une vue en coupe longitudinale du dispositif complet.
[Fig. 2] est une vue en coupe transversale du dispositif complet.
[Fig. 3] est une vue en coupe du dispositif de couplage.
[Fig. 4] est une vue en coupe longitudinale du dispositif complet montrant le chemin de transmission de puissance par le rapport de première.

**[Table 1]**

| Repères | Nomenclature |
|---|---|
| 1 | Dispositif de traction hybride |
| 10 | Carter d'embrayage |
| 11 | Carter de mécanisme |
| 20 | Arbre primaire |
| 21 | Pignon fixe entrainement électrique |
| 30 | Arbre secondaire bas des rapports avant |
| 31 | Arbre secondaire haut de marche arrière |
| 40 | Différentiel |
| 50 | Mécanismes de sélection des vitesses |
| 51 | Fourchettes de commande des baladeurs |
| 60 | Machine électrique |
| 61 | Arbre rotor de machine électrique |
| 62 | Pignon fixe sur arbre rotor |
| 70 | Arbre intermédiaire |
| 71 | Pignon fixe de descente |
| 72 | Pignon fixe sur arbre intermédiaire |
| 80 | Arbre de couplage |
| 81 | Pignon fixe sur arbre de couplage |
| 82 | Pignon fou sur arbre de couplage |
| 83 | Butée à aiguilles appui axial pignon 82 |
| 84 | Anneau arrêt moyeu de coupleur |
| 90 | Coupleur conique |
| 91 | Flasque d'entrainement des cônes |
| 91,a | Crans entraînement flasque |
| 92 | Anneau conique inférieur |
| 93 | Anneau intermédiaire inférieur |
| 94 | Anneau intermédiaire supérieur |
| 95 | Anneau supérieur |
| 96 | Ressort d'ouverture coupleur |
| 97 | Moyeu de coupleur |
| 98 | Fourchette de commande |
| 98,a | Roulement de fourchette de commande |
| 99 | Actionneur de commande |
| 100 | Pompe à huile |

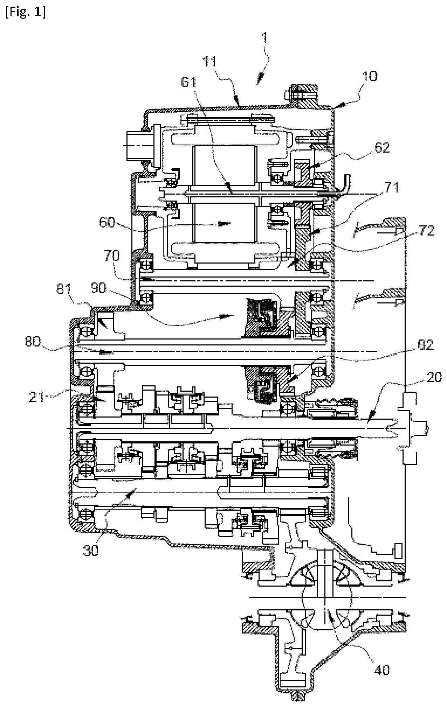

Sur la figure 1, on a représenté en coupe longitudinale, un mode de réalisation du dispositif de traction hybride pour véhicule automobile 1, faisant l'objet de l'invention. Ce dispositif est composé essentiellement d'une boîte de vitesses à arbres parallèles 20, 30, dont un arbre primaire 20 transmet la puissance d'un moteur thermique d'entraînement à un arbre secondaire 30 relié aux roues du véhicule, et d'une machine électrique 60, qui transmet sa puissance sur un rapport unique à l'arbre primaire 20 de la boîte.

Le dispositif proposé 1, constitue un dispositif d'hybridation électrique ou de traction hybride complet. Ce dispositif est une extension d'une boîte de vitesses mécanique classique à arbres parallèles. Dans l'exemple de réalisation non limitatif illustré par les figures, c'est une boîte de vitesses manuelle. Elle peut aussi être équipée d'un embrayage automatisé, ou même être entièrement robotisée. Sans sortir du cadre de l'invention, le dispositif proposé peut aussi être réalisé avec une transmission automatique, notamment à double embrayage.

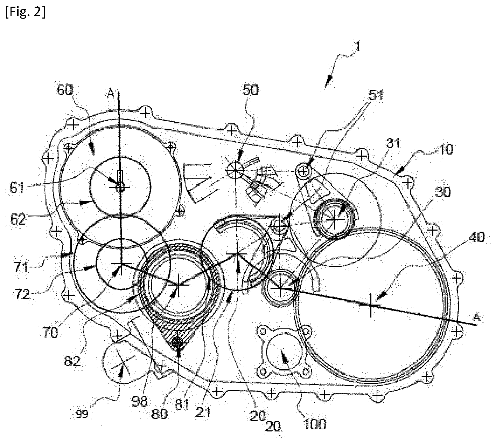

La boîte de vitesses à laquelle on vient rapporter un module d'électrification est composée de deux carters, le carter d'embrayage 10 et le carter de mécanisme 11. A l'intérieur des carters 10, 11, on trouve l'arbre primaire 20, un premier arbre secondaire 30 agencé en partie basse pour les rapports de marche avant, un second arbre secondaire 31 (voir figure 2) agencé en partie haute pour le rapport de marche arrière, un différentiel complet 40, un dispositif de changements de rapports composé d'un ensemble de sélection et passage 50 et des fourchettes de commande des baladeurs 51.

L'hybridation, ou l'électrification de la boîte, consiste à intégrer à l'intérieur de celle-ci une machine électrique 60, dont le rotor est monté sur son arbre 61. Cette machine est alimentée en courant, et commandée, par un onduleur non représenté, disposé à l'extérieur des carters 10,11. L'onduleur est lié à la machine par un connecteur, qui traverse la paroi du carter de mécanisme 11.

Le mouvement de l'arbre rotor 61 de la machine électrique descend sur l'arbre primaire 20 par un mécanisme d'entraînement découplable comprenant au moins un arbre de couplage 80 et un pignon fou 82 accouplable sur celui-ci par un dispositif de couplage 90. L'arbre du rotor 61 supporte une première denture 62 qui coopère avec le pignon 71 et permet de transmettre la puissance de la machine à un arbre intermédiaire 70.

Le mécanisme d'entraînement comprend un arbre intermédiaire 70 transmettant le mouvement de l'arbre de rotor 61 de la machine électrique au pignon fou 82. Cet arbre possède un pignon fixe 72, qui mène le pignon fou 82 porté par l'arbre de couplage 80. Ce dernier porte aussi un pignon fixe 81, engrenant avec le pignon fixe de plus grand diamètre 21 qui est rapporté ou taillé sur l'arbre primaire 20. Dans le mode de réalisation non limitatif de l'invention, illustré par les figures, le mécanisme d'entraînement est rapporté à l'intérieur de la boîte de vitesses. Toutefois, sans sortir du cadre de l'invention, il peut aussi être disposé à l'extérieur de celle-ci.

La transmission de puissance de la machine électrique aux roues, est assurée, de la même manière que pour le moteur thermique, c'est-à-dire par tout ou partie des rapports de la boîte de vitesses. Pour les changements de rapports, le découplage de la machine électrique 60 est nécessaire. Son inertie est trop génératrice d'énergie pour les synchroniseurs normaux d'une boîte de vitesses. Les systèmes sans crabots, du type embrayage, sont plus rapides à ouvrir que les coupleurs à crabots. De nombreux systèmes d'embrayage sont capables en principe, d'assurer le découplage de la machine électrique, notamment des systèmes à commande hydraulique. Toutefois, leur intégration dans une boîte de vitesses manuelle, dépourvue à l'origine de système à pression hydraulique, génère un surcoût important. De plus, les embrayages hydrauliques sont actifs en permanence, si bien qu'ils dégradent sensiblement le rendement mécanique de la transmission.

Sans sortir du cadre de l'invention, différents types de dispositif de couplage peuvent être utilisés. Dans un mode de réalisation non limitatif, le dispositif de couplage 90 est avantageusement un coupleur conique auto-assisté, notamment du type décrit dans la publication FR 2 890 426. Il s'agit d'un système de couplage électromécanique à cônes équipés de rampes d'auto-assistance. Il est capable de développer le couple transmissible requis, et ne nécessite qu'une faible poussée axiale. Son actionneur est stable dans toute ses positions. Il ne dépense de l'énergie que lors les manœuvres. Enfin, ce système de couplage est suffisamment capacitif en dissipation d'énergie, pour rendre possible le couplage d'une machine électrique, avec un écart de régimes important.

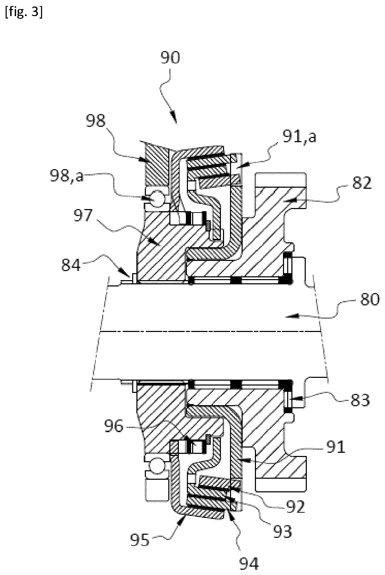

Le coupleur conique 90 illustré par la figure 3 est composé d'un flasque 91 rapporté sur le pignon fou 82, entraînant en rotation un cône inférieur 92 et un cône intermédiaire supérieur 94, et d'un cône supérieur 95 solidaire d'un moyeu 97 fixé sur l'arbre de couplage 80, entraînant aussi en rotation un cône intermédiaire inférieur 93.

Le flasque 91 est par exemple en tôle, et rapporté sur le pignon fou 82, par soudure ou autre moyen. Ce flasque entraîne en rotation un premier cône inférieur 91 et le second cône intermédiaire supérieur 94, grâce aux crans 91,a dans sa périphérie extérieure. Le cône intermédiaire inférieur 93 est solidaire en rotation avec le moyeu 97, par une cannelure dans sa périphérie intérieure. Enfin le cône supérieur 95 est également solidaire du moyeu par l'intermédiaire de dents.

Ce coupleur est auto-assisté, car le couple de glissement et d'adhérence amplifie le serrage et la pression sur les faces de frottement. Le contact des dents du cône supérieur 95 avec le moyeu 97 est oblique, de sorte que le couple de frottement crée une force axiale induite de serrage des cônes les uns sur les autres. Le couple de frottement des dents du cône supérieur 95 sur le moyeu 97 crée une force axiale induite de serrage des cônes 95, 94, 93, 92 les uns sur les autres, en phase de synchronisation ou d'adhérence pendant la phase couplée. La force de serrage des cônes 95, 94, 93, 92, s'ajoute à celle fournie par un actionneur 99 agissant sur une fourchette de commande 98 du dispositif de couplage 90.

L'effort transmis par la fourchette 98 à l'anneau supérieur 95, transite par un roulement 98,a monté dans la fourchette 98. Un ressort 96 repousse l'anneau supérieur 95, et assure la désactivation complète du coupleur conique lors du recul de la fourchette 98 pour le découplage. Le pignon 82 reprend les efforts axiaux appliqués à la fourchette 98 et induits dans le système pendant la phase de synchronisation. Il prend appui sur une butée à aiguilles 83. A l'opposé, le moyeu prend appui sur l'anneau d'arrêt 84.

Enfin pour assurer une lubrification efficace et le refroidissement de la machine électrique, une pompe à huile 100 équipée d'un filtre est agencée en partie basse de la boîte.

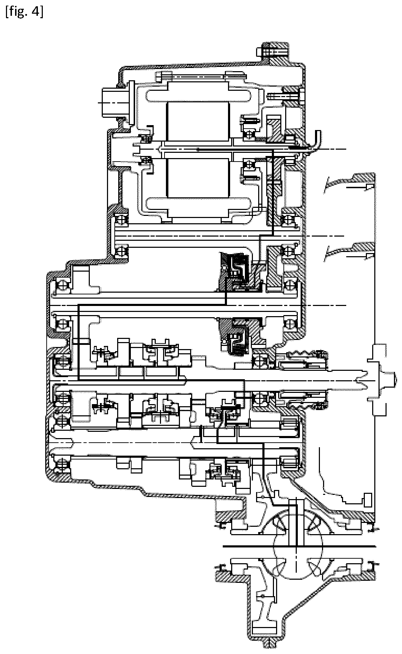

La figure 4 montre le chemin de puissance, de la machine électrique 60 au différentiel 40, en passant par la 1^{ère} engagée. Selon le sens de rotation de la machine électrique, le véhicule sera en marche avant ou en marche arrière.

## Revendications

1. Dispositif de traction hybride (1) pour véhicule automobile composé d'une boîte de vitesses à arbres parallèles, dont un arbre primaire (20) transmet la puissance d'un moteur thermique d'entraînement à un arbre secondaire (20) relié aux roues du véhicule, et d'une machine électrique (60) qui transmet sa puissance sur un rapport unique à l'arbre primaire (20) de la boîte, **caractérisé en ce que** le mouvement de l'arbre rotor (61) de la machine électrique descend sur l'arbre primaire (20) par un mécanisme d'entraînement découplable comprenant un arbre intermédiaire (70) transmettant le mouvement de l'arbre de rotor (61) de la machine électrique à un pignon fou (82) accouplable sur un arbre de couplage (80) par un dispositif de couplage (90).

2. Dispositif de traction hybride selon la revendication 1, **caractérisé en ce que** le mécanisme d'entraînement est rapporté à l'intérieur de la boîte de vitesses.

3. Dispositif de traction hybride selon la revendication 1, **caractérisé en ce que** le mécanisme d'entraînement est rapporté à l'extérieur de la boîte de vitesses.

4. Dispositif de traction hybride selon la revendication 1, 2 ou 3, **caractérisé en ce que** le dispositif de couplage (90) est un dispositif de couplage à coupleurs coniques.

5. Dispositif de traction hybride selon la revendication 4, **caractérisé en ce que** dispositif de couplage (90) est composé d'un flasque (91) rapporté sur le pignon fou (82), entraînant en rotation un cône inférieur (92) et un cône intermédiaire supérieur (94), et d'un cône supérieur (95) solidaire d'un moyeu (97) fixé sur l'arbre de couplage (80), entraînant aussi en rotation un cône intermédiaire inférieur (93).

6. Dispositif de traction hybride selon la revendication 5, **caractérisé en ce que** le contact des dents du cône supérieur (95) avec le moyeu (97) est oblique.

7. Dispositif de traction hybride selon la revendication 6, **caractérisé en ce que** le couple de frottement des dents du cône supérieur (95) sur le moyeu (97) crée une force axiale induite de serrage des cônes (95, 94, 93, 92) les uns sur les autres.

8. Dispositif de traction hybride selon la revendication 7, **caractérisé en ce que** la force de serrage des cônes (95, 94, 93, 92)s'ajoute à celle fournie par un actionneur (99) agissant sur une fourchette de commande (98) dispositif de couplage (90).

9. Dispositif de traction hybride selon la revendication 8, **caractérisé en ce que** l'effort transmis par la fourchette (98) à l'anneau supérieur (95) transite par un roulement (98,a) monté dans la fourchette (98).

10. Dispositif de traction hybride selon la revendication 9, **caractérisé en ce qu'**un ressort (96) repousse l'anneau supérieur (95) et assure la désactivation complète du coupleur conique lors du recul de la fourchette (98) pour le découplage.

11. Dispositif de traction hybride selon la revendication 10, **caractérisé en ce que** le pignon fou (82) reprenant les efforts axiaux appliqués à la fourchette (98), prend appui sur une butée à aiguilles (83).

12. Dispositif de traction hybride selon la revendication 11, **caractérisé en ce que** le moyeu (97) prend appui sur un anneau d'arrêt (84).
